# EUROPEAN PATENT SPECIFICATION

(11) **EP 1 779 696 B1**
(45) Date of publication and mention of the grant of the patent: **19.09.2018**
(21) Application number: 05757234.9
(22) Date of filing: 08.07.2005
(51) Int. Cl.: H04W 36/14, H04W 48/18

(54) **CELL RESELECTION IN A MOBILE COMMUNICATION NETWORK**
ZELLENNEUAUSWAHL IN EINEM MOBILKOMMUNIKATIONSNETZ
SELECTION RENOUVELEE DE CELLULES DANS UN RESEAU DE COMMUNICATION MOBILE

(30) Priority: 10.08.2004 SE 0401997
(43) Date of publication of application: 02.05.2007
(73) Proprietor: Telia Company AB, 169 94 Solna (SE)
(72) Inventor: ERNSTRÖM, Per, S-117 50 Stockholm (SE)
(74) Representative: Zacco Sweden AB
(86) International application number: PCT/SE2005/001139
(87) International publication number: WO 2006/016841

(56) References cited:
- EP-A1- 1 353 521
- US-A1- 2003 013 443
- US-B1- 6 334 052
- US-B1- 6 553 231
- ALCATEL: 3GPP DRAFT; GP-020973, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Seattle; 20020411, 11 April 2002 (2002-04-11), XP050005662, [retrieved on 2002-04-11]
- "3rd Generation Partnership Project; Technical Specification Group Radio Access Network; Radio Resource Control (RRC); Protocol Specification (Release 6)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.2.0, 1 June 2004 (2004-06-01), pages 1-1037, XP050367979,
- MOTOROLA: "Network Sharing: PLMN Selection, Routing and Radio Planning", 3GPP DRAFT; S2-033632, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bangkok; 20031104, 4 November 2003 (2003-11-04), XP050245670, [retrieved on 2003-11-04]
- TELIASONERA: "PLMN selection", 3GPP DRAFT; S2-034115, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. New York, USA; 20031119, 19 November 2003 (2003-11-19), XP050246712, [retrieved on 2003-11-19]
- ERICSSON: "APPROVED V1.0.0 OF RAN3 INTERNAL TR R3.012 (SHARED NETWORK SUPPORT IN CONNECTED MODE)", 3GPP DRAFT; R3-022271 TR R3.012 V1.0.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. China; 20020923, 29 September 2002 (2002-09-29), XP050423605, [retrieved on 2002-09-29]
- "3rd Generation Partnership Project; Technical Specification Group Core Network; Mobile radio interface Layer 3 specification; Core network protocols; Stage 3 (Release 6)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.5.0, 1 June 2004 (2004-06-01), pages 1-491, XP050364438,
- 'Digital cellular telecommunications system (Phase 2+) (GSM)' ETSI TS 123 073 V.4.0.0. 3GPP TS 23.073 March 2001, pages 7 - 10, XP014007595
- 'Digital cellular telecommunications system (Phase 2+); Functions related to Mobile Station (MS) in idle mode and group receive mode' ETSI TS 100 930 V8.7.0 1999, pages 10 - 11, XP014005730

## Description

### TECHNICAL FIELD

The present invention relates to a mobile communication system, and particularly to such a system where false PLMN-identities can be allocated, whereby the adjacent cells a mobile terminal shall have possibility to use for cell reselection can be limited to a subset of the adjacent
cells which exist in the system information on the transmission channel in, for example, a UMTS-cell.

### PRIOR ART

In existing systems, system information usually is transmitted on the transmission channel, in for instance UMTS, about the adjacent cells a mobile terminal shall use as potential cells for cell reselection in idle position and in connected state, but not in connected position DCH-state. The adjacent cells can be on the same frequency,
another frequency, or be based on another radio access technology than UMTS, such as GSM.

In this system information, the PLMN-identity of the adjacent cell is included as an option in a separate system information block, for instance "system information block type 18" (SIB18). If the PLMN-identity is included in the system information, a mobile terminal of Version 4 or later shall limit the adjacent cells the mobile terminal shall use for cell reselection to those cells the PLMN-identity of which either are the same as that by the mobile terminal selected PLMN, or an equivalent PLMN-identity. The PLMN which a given mobile terminal shall regard as equivalent to the selected PLMN are signaled to the mobile terminal as a list of equivalent PLMN in the messages LOCATION AREA
UPDATING ACCEPT and ROUTING AREA UPDATE ACCEPT [24.008]

In the circuit switched domain in the core network, the mobility handling in the idle position is based on location areas, LA, whereas the mobility handling in the packet domain is based on routing areas, RA. A routing area, RA,
is always a part of a location area, LA. In reality LA and RA normally are identical.

The American patent US 6,387,027 E1 describes a method and a system to avoid repeated registration attempts to a PLMN to which does not allow registration of/for a certain mobile terminal. At the same time, registration attempts are allowed to other PLMN which have been placed on a list with/of PLMN-identities, which earlier have denied registration, but which may allow registration on a later
is occasion. At least a part of the list can be deleted and can be deleted at convenient points of time. When a part of the list not possible to delete is filled with PLMN-identities which have denied registration, the rest of PLMN-identities are moved to the part of the list which can
be deleted. The part of the list which can be deleted is deleted when the mobile terminal is switched off.

The American patent document US 2003/0185183 A1 relates to mobile communication devices, for instance mobile terminals, which can communicate with a computer network. A Network Access Controller (ANC) is provided to fill the list of adjacent cells of a mobile terminal with nonadjacent cells, i.e. with cells which are served by another ANC. The list of adjacent cells shall be transmitted to a
mobile terminal which is in an adjacent cell. The ANC in question which serves the current cell of the mobile terminal identifies non-adjacent cells in the list, to which non-adjacent cells transfer of calls cannot be made. The current ANC instructs the mobile terminal to terminate
the call, at which the mobile terminal re-establishes the call with a new cell which provides the strongest signal.

The new cell preferably is the cell to which the mobile terminal has moved.

The American patent document US 2003/0040311 A1 relates to cell reselection of a mobile terminal in a mobile communication system. Adjacent cells are classified as cells which can receive signals and cells which can not receive signals, based on observed signal strength. At cell reselection, information about state is only searched for the adjacent cells which have been classified as being able to receive signals, or receiving signals, whereupon one of these adjacent cells is selected for cell reselection.

The European patent application EP 1 353 521 A1 describes cell reselection of a mobile terminal when a plurality of PLMN from different operators are available. In order to make cell reselection possible, a list of PLMN-identities of all base stations which can be received is transmitted in such a format that the mobile terminal easily and rapidly can derive the criteria which are necessary for cell reselection.

### Prior art documents also include:

### ALCATEL:

3GPP DRAFT; GP-020973, 3RD GENERATION PARTNERSHIP PROJECT (3GPPj, MOBILE COMPETENCE CENTRE; 650, ROUTE DES LUCIOLES ; F-06921 SOPHIA-ANTIPOLIS CEDEX ; FRANCE, vol TSG GERAN, no. Seattle. 20020411, 11 April 2002 (2002-04-11), XP050005662.
"3rd Generation Partnership Project; Technical Specification Group Radio Access Network; Radio Resource Control (RRC); Protocol Specification
   (Release 6)",
   3GPP STANDARD; 3GPP TS 25.331, 3RD GENERATION PARTNERSHIP PROJECT (3GPP), MOBILE COMPETENCE CENTRE: 650, ROUTE DES LUCIOLES ; F-06921 SOPHIA-ANTIPOLIS CEDEX ; FRANCE, no. V6.2.0, 1 June 2004 (2004-06-01), pages 1-1037, XP050367979,
MOTOROLA: "Network Sharing PLMN Selection, Routing and Radio Planning", 3GPP DRAFT; S2-033632, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vet. SA WG2, no. Bangkok; 20031104, 4 November 2003 (2003-11-04), XP050245670,
TELIASONERA: "PLMN selection", 3GPP DRAFT; 52-034115, 3RD GENERATION PARTNERSHIP PROJECT (3GPP), MOBILE COMPETENCE CENTRE, 650, ROUTE DES LUCIOLES , F-06921 SOPHIA-ANTIPOLIS CEDEX ; FRANCE, vol. SA WG2, no. New York, USA; 20031119, 19 November 2003 (2003-11-19), XP050246712,
ERICSSON: "APPROVED V1.0.0 OF RAN3 INTERNAL TR R3.012 (SHARED NETWORK SUPPORT IN CONNECTED MODE)", 3GPP DRAFT; R3-022271 TR R3.012 V1.0.0, 3RD GENERATION PARTNERSHIP PROJECT (3GPP), MOBILE COMPETENCE CENTRE: 650, ROUTE DES LUCIOLES; F-06921 SOPHIA-ANTIPOLIS CEDEX; FRANCE, vol. RAN WG3, no China, 20020923, 29 September 2002 (2002-09-29), XP050423605,
"3rd Generation Partnership Project; Technical Specification Group Core Network; Mobile radio interface Layer 3 specification: Core network protocols; Stage 3 {Release 6)", 3GPP STANDARD; 3GPP TS 24.008, 3RD GENERATION PARTNERSHIP PROJECT (3GPP), MOBILE COMPETENCE CENTRE; 650, ROUTE DES LUCIOLES: F-06921 SOPHIA-ANTIPOLIS CEDEX, FRANCE, no. V6.5.0, 1 June 2004 (2004-06-01), pages 1-491, XP050364438,
EP 1 353521 A1 (EVOLIUM SAS {FR]) 15 October 2003 (2003-10-15)

Disadvantages of the above described technology are that:
- cells with the same PLMN-identity as that by a mobile terminal selected PLMN cannot be excepted from being used for cell reselection; and
- for the fraction of adjacent cells with a given PLMN, different from the by the mobile terminal selected PLMN, either all these adjacent cells must be used for cell reselection, or all be excluded from cell reselection, based on if the given PLMN has been signaled as an equivalent PLMN or not to the mobile terminal. It consequently is not possible to exclude from cell reselection some, but not all, adjacent cells with a given PLMN-identity.

If a mobile terminal is forced to unnecessarily use an adjacent cell for cell reselection, this may result in:
- faster consumption of battery because the mobile terminal has to measure at more cells; and
- longer time delays at cell reselection because it may take longer time to identify right cell to make cell reselection to, when there are more candidate cells.

Further negative effects will occur when the mobile terminal makes cell reselection to a cell to which it should not make cell reselection. What effects will occur and how large these will be depends on how this is handled in the new cell, but typically this will result in further delays and possibly also unnecessary load in the new cell.

Delays at cell reselection deteriorates the quality of offered services, for instance by increased risk to miss incoming calls due to missed paging, delays at set up of service, deteriorated session continuity in connected position FACH/CELL PCH/URA PCH-state.

One aim of the present invention consequently is to overcome these disadvantages.

### SUMMARY OF THE INVENTION

The present invention relates to a method, a device and a computer program product according to the independent patent claims, in order to, among other things, overcome the disadvantages of the known technology mentioned above. Preferred embodiments are defined in the non-independent patent claims.

### BRIEF DESCRIPTION OF THE DRAWINGS

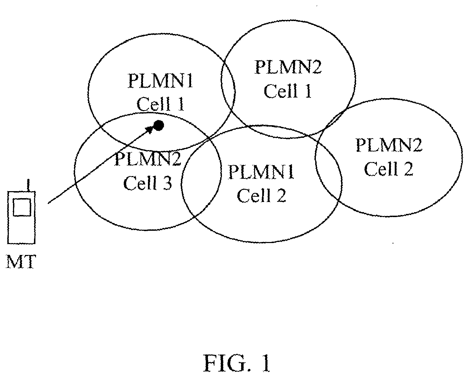

The present invention will be described thoroughly in the following, with reference to enclosed drawing, in which: Fig. 1 schematically shows a mobile communication system in which the present invention can be used.

### DESCRIPTION OF PREFERRED EMBODIMENTS

The present invention now will be described in more details. In the description of the invention the following acronyms and abbreviations will be used:
- GSM: Global System for Mobile Communications
- DCH: Dedicated Channel
- GPRS: General Packet Radio Service
- GSN: GPRS support node
- HSDPA: High Speed Downlink Packet Access
- IMEI: International Mobile Equipment Identity
- IMEI-SV: IMEI and Software Version Number
- IMSI: International Mobile Subscriber Identity/ International Mobile Station Identity
- LA: Location Area
- MSC: Mobile Switching Center
- PLMN: Public Land Mobile Network
- RA: Routing Area
- SGSN: Serving GSN
- UMTS: Universal Mobile Telecommunications System

Generally the invention can be described by the steps to:
- associate false PLMN-identities, *falsePLMN,* to certain cells in the lists of/over adjacent cells, and transmit these false PLMN-identities instead of the actual PLMN-identities in the list of information about adjacent cells on a transmission channel in, for instance, UMTS, and to
- signal these false PLMN-identities as equivalent PLMN to the mobile terminals which shall have possibility to make cell reselection to said certain cells, but not to other mobile terminals, wherein said other mobile terminals shall not be allowed to make cell reselection to said certain cells.

Fig. 1 shows schematically a mobile communication system including a plurality of public mobile communication networks, PLMN1, PLMN2. Each PLMN includes a number of cells PLMN1 cell 1, PLMN1 cell2, PLMN2 cell 1, PLMN2 cell 2, PLMN2 cell 3, which cells include lists of adjacent cells with information about which adjacent cells a mobile terminal, MT, in a first cell, PLMN1 cell 1, shall use for cell reselection.

According to the invention, false PLMN-identities, *FalsePLMN,* are associated to one or more other cells, PLMN2 cell 3, in a list of neighboring/adjacent cells. These false PLMN-identities are transmitted instead of the actual PLMN-identities in the information about adjacent cells which is transmitted on a transmission channel in the first cell, PLMN1 cell 1. Further, these false PLMN-identities are signaled as equivalent PLMN to the mobile terminal, MT, which shall be allowed to make cell reselection to an associated adjacent cell, PLMN 2 cell 3, but not to the mobile terminals which shall not be allowed to make cell reselection to the associated adjacent cell, PLMN 2 cell 3.
The invention is disclosed according to the independent claims.
Furthermore, as an example not being part of the present invention, if PLMN2 is not equal to PLMN1, PLMN2 is signaled as equivalent PLMN to all mobile terminals that shall be allowed to make cell reselection to any cell in PLMN2, for example to PLMN2 cell 1, PLMN2 cell2.

All mobile terminals read/determine from the system information which PLMN that is associated to each adjacent cell. If this PLMN is neither the PLMN to which the mobile terminal is registered nor included in the equivalent PLMN list of the mobile terminal, then the mobile terminal will
exclude the corresponding adjacent cell as a candidate for cell reselection.

A more detailed description of an embodiment of the invention follows after this. In this embodiment a given location area, LA, or a routing area, RA, is studied. Let the set *M* be the set of all mobile terminals and let the set *G* be the set of all adjacent cells to/of all cells in the given location area, LA, or the routing area, RA. An adjacent cell is defined by two cell identities, the identity of the adjacent cell itself, and the identity of
the cell which has the adjacent cell in its list of adjacent cells.
Note that a certain cell can occur a plurality of times in the set *G* because it can be adjacent cell to a plurality of
cells in the location area, LA, or the routing area, RA.

In order, to get a subset m of all mobile terminals *M* in the mobile network to exclude a subset ***g*** of the set *G* in/of all adjacent cells to all cells in a given LA or RA from cell reselection, the following is made.

Associate to the subset ***g*** of adjacent cells a false PLMN-identity, *falsePLMN,* which is not the same as the actual PLMN-identity for any of the adjacent cells in *G,* and indicate this false PLMN-identity as PLMN-identity of these adjacent cells in the system information, as a system information block, for instance SIB18. With the actual PLMN-identity of a given cell is, in this description, aimed at the PLMN-identity which is indicated in the system information on the transmission channel in the given cell, for instance a given UMTS-cell.

When a mobile terminal enters into LA or RA and makes a request for updating of location, for instance LOCATION UPDATING REQUEST, alternatively a request for updating of routing area, for instance ROUTING AREA UPDATE REQUEST, then transmit *falsePLMN* of the list of equivalent PLMN to the mobile terminal if, and only if, it does not belong to the subset m. As an example not being part of the present invention, if the actual PLMN-identity of any, one or
more, of the adjacent cells in the subset m differs from the by the mobile terminal selected PLMN-identity, also these actual PLMN-identities shall be part of the list of equivalent PLMN-identities of the mobile terminals which are not part of the subset m.

All mobile terminals determine from the system information which PLMN that is associated to each adjacent cell in the set *G.* If this PLMN is neither the PLMN to which the mobile terminal is registered nor included in the equivalent PLMN list of the mobile terminal, then the mobile terminal will exclude the corresponding adjacent cell as a candidate for cell reselection.

For adjacent cells belonging to the subset ***g*,** the associated PLMN is a *falsePLMN* that is not equal to the PLMN to which the mobile terminals are registered. For a mobile terminal belonging to the subset *m, falsePLMN* is not included on the equivalent PLMN list of the mobile terminal, and the mobile terminal will then exclude this adjacent cell as a candidate for cell reselection. For a mobile terminal not belonging to the subset m, a falsePLMN is included on the equivalent PLMN list of the mobile terminal, and the mobile terminal will then keep this adjacent cell as a candidate for cell reselection.

As an example not being part of the present invention, in cases the subset ***g*** consists of the amount of all adjacent cells with a given actual PLMN-identity, and where this given actual PLMN-identity is different from the PLMN-identity in the current location area, LA or the routing area, RA, the same effect can be achieved by indicating the
actual PLMN-identity in the system information block, for instance SIB18. The same applies when the subset ***g*** consists of a union of sets, all of the type which has been described above.

The subset m of the set *M* including all mobile terminals in the mobile network can be defined on basis of the
information which is available in the MSC-node or SGSN-node which transmits the list of equivalent PLMN to the mobile terminal in a LOCATION AREA UPDATING ACCEPT- or ROUTING AREA UPDATE ACCEPT-message, for instance IMSI, IMEI, or IMEI-SV.

The present invention can be generalized to include a plurality of sets {*m*ᵢ, *g*ᵢ*, false*PLMNᵢ} i=1...N, so that each mobile terminal which belongs to the subset *m*ᵢ, excludes the subset *g*ᵢ, of adjacent cells from cell reselection,
provided that the subsets *g*ᵢ are disjunctive and falsePLMNᵢ, is different from falsePLMNₖ when i is different from k.

It should be understood that a mobile terminal can belong to a plurality of subsets *m*ᵢ. The number of subsets *m*ᵢ a mobile terminal can belong to is only limited by the maximal length of the list of/over equivalent PLMN, which normally is five PLMN. The maximal length, however, can be varied and it may also be extended for newer versions of
mobile terminals.

It further should be understood that in each location area, LA, or routing area, RA, independent sets of
{*m*ᵢ, *g*ᵢ*, false*PLMNᵢ} i=1...N, can be used.

The present invention can be used in a plurality of fields of use, such as, a) network sharing, b) handling of mobile terminals with error, c) handling of mobile terminals with different functionality, and d) in connection with multiple
PLMN in Version 6. These fields of use now will be exemplified.
a) Network sharing. Suppose that a number of operators share certain parts of their networks by an agreement about limited national roaming. The limitation is constituted by an operator's customers being allowed only to roam in certain LA or RA of the other operators.
When a customer tries to roam in an LA or RA to which this customer is not entitled according to the network share agreement, the customer's LOCATION AREA UPDATING REQUEST-message or ROUTING AREA UPDATE REQUEST-message is rejected by a LOCATION AREA UPDATING REJECT-message or a ROUTING AREA UPDATE REJECT-message. The in the message indicated reason can, for instance, either be that roaming is not
allowed in this location area "Roaming not allowed in this location area", or that the location area is not allowed "Location area not allowed".

With the present invention, the adjacent cells which a is mobile terminal shall use for cell reselection can be limited in such a way that the adjacent cells which belong to an LA or an RA where the customer is not entitled to roam, are excluded. In this way, the mobile terminal avoids making superfluous attempts at LOCATION AREA UPDATING REQUEST alternative ROUTING AREA UPDATE REQUEST in prohibited LA and RA.

It should be noted that network sharing as above can be done in a large number of ways. Below two variants are specified, in which the invention can be useful in order to indicate something of the scope of the invention concept.

Network sharing scenario 1: All the operators which are involved in the network sharing agreement have own urban networks, whereas the countryside has been divided so that the operators will be responsible for one region each. In the urban networks, the customers only are allowed to be on the network of her/his own operator, whereas they in the countryside are allowed to be on that of the operator which
has been given the responsibility of the region in question.

Network sharing scenario 2: An operator has, for instance, a UMTS-network and a GSM-network with PLMN-identity in common. A number of customers of other network operators are allowed to make national roaming in the UMTS-part of the network, but not in the GSM-part, i.e. all LA an/or RA in the GSM-network are prohibited to/for the customers of the other network operators.
b) Handling of mobile terminals with error In UMTS there is functionality specified for the mobile terminals which is not used initially, but which may be used when the networks are upgraded in order to raise the capacity, or improve the quality. Since this functionality is not used initially,
   there is a risk that mobile terminals will be spread on the market which mobile terminals have undetected errors which are discovered only when the network is upgraded. This may result in problems to the users having those faulty terminals, but they also can influence the system in a
   negative way, for instance by the quality and the capacity being deteriorated.
   The present invention can be used to prevent these types of mobile terminals from making cell reselection in the cells in which the current functionality is used. Note that this need not imply that mobile terminals will lose coverage, because there may be other cells on other frequencies, or cells based on other radio access technologies.
c) Handling of mobile terminals with different functionality. In UMTS there are many different types of mobile terminals with different functionality. The different functionalities can be defined on the one hand depending on its version, but also depending on its terminal class and its terminal capabilities.
   If an operator implements a certain network functionality only in certain cells, it may be useful to reserve these cells for those mobile terminals which have corresponding functionality. For instance, an operator may have
   implemented the function "High Speed Downlink Packet Access" (HSDPA, UMTS Version 5) on an own frequency in one or more network nodes (hot spots).
   The present invention can be used to prevent mobile io terminals which do not have the necessary functionality to make cell reselection in the cells in which the current network functionality has been implemented.
d) In connection with multiple PLMN in Version 6. Version 6 of the 3GPP-standard is going to be finalized and is planned to be stopped to/for new functionality in the near future. Multiple PLMN in Version 6 will make possible that a network operator can introduce functionality to have a plurality of PLMN in one and the same cell, at which
   separate PLMN for different operators can be used in cells in common in a shared national UMTS-network, which for instance makes 3G-roaming possible.

If this functionality is introduced, an adjacent cell can have a plurality of PLMN, but it still only will be possible to indicate one PLMN in the lists of adjacent cells. By means of false PLMN-identities it then will be possible to control to which cells each mobile terminal shall have possibility to make cell reselection. In that
way it would be possible to save network capacity, because it would cost a lot of capacity to transmit multiple PLMN for all adjacent cells.

The present invention has been described above by means of an exemplifying embodiment and example, it however should be understood that these do not intend to limit the invention which is only limited by the enclosed patent claims.

## Claims

1. Method for cell reselection in a mobile communication system, including a plurality of public mobile communication networks, PLMN, (PLMN1, PLMN2), each with a number of cells (PLMN1 cell 1, PLMN1 cell 2, PLMN2 cell 1, PLMN2 cell 2, PLMN2 cell 3), which cells include lists of/over adjacent cells with information about which adjacent cells a mobile terminal (MT) in a first cell (PLMN1 cell 1) shall use for cell reselection, where said method includes the steps to:
- associating false PLMN-identities, *false*PLMN, to one or more other cells (PLMN2 cell 3) in a list of/over adjacent cells, and transmit these false PLMN-identities instead of the actual PLMN-identities in the information about adjacent cells which is transmitted on a transmission channel in the first cell (PLMN1 cell 1), and to
- signalling these false PLMN-identities as equivalent PLMN to the mobile terminals (MT) which shall have possibility to make cell reselection to said one or more other cells (PLMN2 cell 3), but not to other mobile terminals, wherein said other mobile terminals shall not be allowed to make cell reselection to said one or more other cells.

2. Method as claimed in claim 1, further including the steps to:
- letting the set ***M*** be the set of all mobile terminals in a given location area, LA, or a given routing area, RA;
- letting ***G*** be the set of all adjacent cells to/of all cells in the given location area, LA, or routing area, RA;
- making a subset ***m*** of the set of all mobile terminals ***M*** to exclude a subset ***g*** of the set of all adjacent cells ***G*;**
- associating to the subset ***g*** of adjacent cells a false PLMN-identity which is different from the actual PLMN-identity of/for the adjacent cells in the set ***G;***
- indicating the false PLMN-identity as PLMN-identity of/for the adjacent cells ***g*** in a system information block;
- if the mobile terminal does not belong to the subset ***m,*** transmitting the false PLMN-identity in a list of/over equivalent PLMN to the mobile terminal, when the mobile terminal enters into LA or RA and makes a location updating request or a routing updating request.

3. Method as claimed in claim 2, wherein the subset ***m*** of the set ***M*** including all mobile terminals in the communication network is defined on basis of information available in an MSC-node or SGSN-node which transmits a list of/over equivalent PLMN to the mobile terminal in a "Location area updating accept-" or "Routing area update accept-".-message.

4. Method as claimed in any of the claims 2-3, further including a plurality of sets {***m***ᵢ, **g***ᵢ*, *false*PLMNᵢ} i=1...N, so that each mobile terminal which belongs to the subset ***m***ᵢ excludes the subset ***g***ᵢ, of adjacent cells from cell reselection, provided that the subsets ***g***ᵢ are disjunctive and *false*PLMNᵢ is different from *false*PLMNₖ, when i is different from k.

5. Method as claimed in claim 4, wherein a mobile terminal can belong to a plurality of subsets ***m***ᵢ and that the number of subsets ***m***ᵢ which a mobile terminal can belong to, can be limited by the maximal length of the list of/over equivalent PLMN.

6. Method as claimed in claim 4 or 5, wherein different sets of {***m***ᵢ, **g***ᵢ*, *false*PLMNᵢ} i=1...N can be used in each location area, LA, or routing area, RA.

7. Method as claimed in any of the claims 1-6, wherein said mobile communication network, PLMN, is UMTS or GSM.

8. A computer program product for cell reselection in a mobile communication system, including a plurality of public mobile communication networks PLMN, (PLMN1, PLMN2), each with a number of cells (PLMN1 cell 1, PLMN1 cell 2, PLMN2 cell 1, PLMN2 cell 2, PLMN2 cell 3), which cells include lists of/over adjacent cells with information about which adjacent cells a mobile terminal (MT) in a first cell (PLMN1 cell 1) shall use for cell reselection, comprising program code parts arranged to execute the method as claimed in any of the claims 1-7.

## Patentansprüche

1. Verfahren zur Zellneuauswahl in einem Mobilkommunikationssystem, umfassend eine Mehrzahl von öffentlichen Mobilkommunikationsnetzen, PLMN, (PLMN1, PLMN2), jedes mit einer Anzahl von Zellen (PLMN1 Zelle 1, PLMN1 Zelle 2, PLMN2 Zelle 1, PLMN2 Zelle 2, PLMN2 Zelle 3), wobei die Zellen Listen von/über benachbarte(n) Zellen mit Informationen über die benachbarten Zellen, die eine mobiles Endgerät (MT) in einer ersten Zelle (PLMN1 Zelle 1) für Zellneuauswahl verwenden soll, beinhalten, wobei das Verfahren die folgenden Schritte umfasst:
- Verknüpfen von falschen PLMN-Identitäten, *false*PLMN, mit einer oder mehreren anderen Zellen (PLMN2 Zelle 3) in einer Liste von/über benachbarte(n) Zellen, und Übertragen dieser falschen PLMN-Identitäten statt der aktuellen PLMN-Identitäten in den Informationen über benachbarte Zellen, die über einen Übertragungskanal in der ersten Zelle (PLMN1 Zelle 1) übertragen werden, und
- Signalisieren dieser falschen PLMN-Identitäten als äquivalente PLMN zu den mobilen Endgeräten (MT), denen es ermöglicht werden soll, eine Zellneuauswahl an die eine oder die mehreren anderen Zellen (PLMN2 Zelle 3), jedoch nicht an andere mobile Endgeräte, auszuführen, wobei den anderen mobilen Endgeräten nicht zugelassen werden soll, eine Zellneuauswahl an die eine oder die anderen anderen Zellen auszuführen.

2. Verfahren nach Anspruch 1, ferner umfassend die folgenden Schritte:
- veranlassen, dass der Satz ***M*** der Satz von allen mobilen Endgeräten in einem jeweiligen Standortbereich, LA, oder in einem jeweiligen Routingbereich, RA, ist;
- veranlassen, dass ***G*** der Satz von allen benachbarten Zellen für/von alle(n) Zellen in dem jeweiligen Standortbereich, LA, oder Routingbereich, RA, ist;
- Erstellen einer Untergruppe ***m*** des Satzes von allen mobilen Endgeräten ***M,*** um eine Untergruppe ***g*** aus dem Satz von allen benachbarten Zellen ***G*** auszuschliessen;
- Verknüpfen einer falschen PLMN-Identität mit der Untergruppe ***g*** von benachbarten Zellen, welche falsche PLMN-Identität von der aktuellen PLMN-Identität von/für den/die benachbarten Zellen des Satzes ***G*** unterschiedlich ist;
- Angeben der falschen PLMN-Identität als PLMN-Identität von/für den/die benachbarten Zellen ***g*** in einem Systeminformationsblock;
- wenn das mobiles Endgerät nicht zu der Untergruppe ***m*** gehört, Übertragen der falschen PLMN-Identität in einer Liste von/über äquivalente(n) PLMN an das mobile Endgerät, wenn das mobile Endgerät in den LA oder RA eintritt und eine Standortaktualisierungsanforderung oder eine Routingaktualisierungsanforderung erstellt.

3. Verfahren nach Anspruch 2, wobei die Untergruppe ***m*** des Satzes ***M,*** die alle mobilen Geräte in dem Kommunikationsnetz beinhaltet, auf der Basis von Informationen, die in einem MSC-Knoten oder SGSN-Knoten verfügbar sind, definiert ist, welcher eine Liste von/über äquivalente(n) PLMN in einer "Standortbereichaktualisierungsannahme-" oder "Routingbereichaktualisierungsannahme-"-Nachricht an das mobile Endgerät überträgt.

4. Verfahren nach einem der Ansprüche 2-3, ferner umfassend eine Mehrzahl von Sätzen {***m***ᵢ,**g***ᵢ*,*false*PLMNᵢ} i=1 ...N, so dass jedes mobile Endgerät, das zu der Untergruppe ***m***ᵢ gehört, die Untergruppe ***g***ᵢ, von benachbarten Zellen aus einem Zellneuauswahl ausschließt, mit der Maßgabe, dass die Untergruppen ***g***ᵢ disjunktiv sind, und *false*PLMNᵢ von *false*PLMNₖ unterschiedlich ist, wenn i von k unterschiedlich ist.

5. Verfahren nach Anspruch 4, wobei ein mobiles Endgerät zu einer Mehrzahl von Untergruppen ***m***ᵢ gehören kann, und dass die Anzahl von Untergruppen ***m***ᵢ, zu denen ein mobiles Endgerät gehören kann, von der maximalen Länge der Liste von/über äquivalente(n) PLMN begrenzt sein kann.

6. Verfahren nach Anspruch 4 oder 5, wobei unterschiedliche Sätze von {***m***ᵢ,**g***ᵢ*,*false*PLMNᵢ} i=1...N in jedem Standortbereich, LA, oder Routingbereich, RA, verwendet werden können.

7. Verfahren nach einem der Ansprüche 1-6, wobei das mobile Kommunikationsnetz, PLMN, UMTS oder GSM ist.

8. Computerprogrammprodukt für Zellneuauswahl in einem Mobilkommunikationssystem, umfassend eine Mehrzahl von öffentlichen Mobilkommunikationsnetzen, PLMN, (PLMN1, PLMN2), jedes mit einer Anzahl von Zellen (PLMN1 Zelle 1, PLMN1 Zelle 2, PLMN2 Zelle 1, PLMN2 Zelle 2, PLMN2 Zelle 3), wobei die Zellen Listen von/über benachbarte(n) Zellen mit Informationen über die benachbarten Zellen, die eine mobiles Endgerät (MT) in einer ersten Zelle (PLMN1 Zelle 1) für Zellneuauswahl verwenden soll, beinhalten, umfassend Programmkodeteile, die zur Ausführung des Verfahrens nach einem der Ansprüche 1-7 ausgelegt sind.

## Revendications

1. Procédé de sélection renouvelée de cellule dans un système de communication mobile, comprenant une pluralité de réseaux publics de communication mobile, PLMN, (PLMN1, PLMN2), chacun avec un nombre de cellules (cellule 1 PLMN1, cellule 2 PLMN1, cellule 1 PLMN2, cellule 2 PLMN2, cellule 3 PLMN2), lesdites cellules comprenant des listes de / sur des cellules adjacentes avec des informations sur les cellules adjacentes qu'un terminal mobile (MT) dans une première cellule (cellule 1 PLMN1) doit utiliser pour la sélection renouvelée de cellule, où ledit procédé comprend les étapes consistant à :
- associer de fausses identités PLMN, *false*PLMN, à une ou plusieurs autres cellules (cellule 3 PLMN2) dans une liste de / sur des cellules adjacentes, et transmettre ces fausses identités PLMN au lieu des identités PLMN réelles dans les informations sur les cellules adjacentes qui sont transmis sur un canal de transmission dans la première cellule (cellule 1 PLMN1), et à
- signaler ces fausses identités PLMN en tant que PLMN équivalent aux terminaux mobiles (MT) qui doivent avoir la possibilité d'effectuer une sélection renouvelée de cellule auxdites une ou plusieurs autres cellules (cellule 3 PLMN2), mais non pas à d'autres terminaux mobiles, où lesdits autres terminaux mobiles ne doivent pas être autorisés d'effectuer une sélection renouvelée de cellule auxdites une ou plusieurs autres cellules.

2. Procédé selon la revendication 1, comprenant en outre les étapes consistant à :
- laisser l'ensemble ***M*** être l'ensemble de tous les terminaux mobiles dans une zone de localisation donnée, LA, ou une zone de routage donnée, RA ;
- laisser ***G*** être l'ensemble de toutes les cellules adjacentes à / de toutes les cellules dans la zone de localisation donnée, LA, ou la zone de routage, RA ;
- faire un sous-ensemble ***m*** de l'ensemble de tous les terminaux mobiles ***M*** pour exclure un sous-ensemble ***g*** de l'ensemble de toutes les cellules adjacentes ***G*** ;
- associer au sous-ensemble ***g*** de cellules adjacentes une fausse identité PLMN qui est différente de l'identité PLMN réelle de / pour les cellules adjacentes dans l'ensemble ***G*** ;
- indiquer la fausse identité PLMN comme identité PLMN de / pour les cellules adjacentes ***g*** dans un bloc d'informations système ;
- si le terminal mobile n'appartient pas au sous-ensemble ***m,*** transmettre la fausse identité PLMN dans une liste de / sur PLMN équivalent au terminal mobile, lorsque le terminal mobile entre dans LA ou RA et effectue une demande de mise à jour de localisation ou une demande de routage de mise à jour.

3. Procédé selon la revendication 2, dans lequel le sous-ensemble ***m*** de l'ensemble ***M*** comprenant tous les terminaux mobiles dans le réseau de communication est défini sur la base d'informations disponibles dans un noeud MSC ou un noeud SGSN qui transmet une liste de / sur PLMN équivalent au terminal mobile dans un message de "l'acceptation de mise à jour de zone de la localisation (Location area updating accept)" ou "l'acceptation de mise à jour de la zone de routage (Routing area update accept)".

4. Procédé selon l'une quelconque des revendications 2 à 3, comprenant en outre une pluralité d'ensembles {***m***ᵢ,***g***ᵢ,*false*PLMNᵢ} i=1 ...N, si bien que chaque terminal mobile qui appartient au sous-ensemble ***m***ᵢ exclut le sous-ensemble ***g***ᵢ, de cellules adjacentes de la sélection renouvelée de cellule, à condition que les sous-ensembles ***g***ᵢ soient disjonctifs et que *false*PLMNᵢ soit différent de *false*PLMNₖ, quand i est différent de k.

5. Procédé selon la revendication 4, dans lequel un terminal mobile peut appartenir à une pluralité de sous-ensembles ***m***ᵢ et que le nombre de sous-ensembles ***m***ᵢ auquel peut appartenir un terminal mobile, peut être limité par la longueur maximale de la liste de / sur PLMN équivalent.

6. Procédé selon la revendication 4 ou 5, dans lequel différents ensembles de {***m***ᵢ,**g***ᵢ*,*false*PLMNᵢ} i=1...N peuvent être utilisés dans chaque zone de localisation, LA, ou zone de routage, RA.

7. Procédé selon l'une quelconque des revendications 1 à 6, dans lequel ledit réseau de communication mobile, PLMN, est UMTS ou GSM.

8. Produit programme d'ordinateur pour sélection renouvelée de cellule dans un système de communication mobile, comprenant une pluralité de réseaux publics de communication mobile, PLMN, (PLMN1, PLMN2), chacun avec un nombre de cellules (cellule 1 PLMN1, cellule 2 PLMN1, cellule 1 PLMN2, cellule 2 PLMN2, cellule 3 PLMN2), lesdites cellules comprenant des listes de / sur des cellules adjacentes avec des informations sur les cellules adjacentes qu'un terminal mobile (MT) dans une première cellule (cellule 1 PLMN1) doit utiliser pour la sélection renouvelée de cellule, comprenant des parties de code de programme disposées pour exécuter un procédé selon l'une quelconque des revendications 1 à 7.
